# EUROPÄISCHE PATENTSCHRIFT

(11) **EP 3 381 253 B1**
(45) Veröffentlichungstag und Bekanntmachung des Hinweises auf die Patenterteilung: **26.05.2021**
(21) Anmeldenummer: 18164249.7
(22) Anmeldetag: 27.03.2018
(51) Int. Cl.: A01B 73/04

(54) **LANDWIRTSCHAFTLICHE MASCHINE MIT TIEFENFÜHRUNGSELEMENTEN**
AGRICULTURAL MACHINE WITH DEPTH GUIDANCE ELEMENTS
ENGIN AGRICOLE DOTÉ D'ÉLÉMENTS DE GUIDAGE EN PROFONDEUR

(30) Priorität: 28.03.2017 DE 102017106633
(43) Veröffentlichungstag der Anmeldung: 03.10.2018
(73) Patentinhaber: Horsch Maschinen GmbH, 92421 Schwandorf (DE)
(72) Erfinder: HANF, Friedemann, 92421 Schwandorf (DE); RAAB, Sebastian, 92421 Schwandorf (DE)
(74) Vertreter: Benninger, Johannes

(56) Entgegenhaltungen:
- US-A- 4 206 815
- US-A1- 2004 069 510
- US-A1- 2013 098 645
- US-A1- 2015 129 250

## Beschreibung

Die vorliegende Erfindung betrifft eine landwirtschaftliche Maschine zur Bodenbearbeitung und/oder zum Ausbringen von landwirtschaftlichem Verteilgut mit den Merkmalen des unabhängigen Anspruchs 1.

Landwirtschaftliche Maschinen zur Bodenbearbeitung und/oder zum Ausbringen von landwirtschaftlichen Verteilgütern wie Saatgut, Dünger oder dergl. sind aus dem Stand der Technik bereits in den verschiedensten Ausführungsvarianten bekannt. Derartige Maschinen werden bspw. zur Bodenbearbeitung, d.h. zur Lockerung einer Ackerfläche und/oder zur Aussaat von Verteilgütern verwendet, wofür den Maschinen jeweils verschiedenste Arbeitswerkzeuge, wie Zinken, Sechscheiben, Säschare oder dergl., zugeordnet sind, wobei auch wiederum jeweils verschiedenste Arbeitswerkzeuge zu einer Maschine kombiniert werden können. Um eine gewünschte Arbeitstiefe der jeweiligen Arbeitswerkzeuge zu erreichen, können diese in Bezug zu einem Rahmen der landwirtschaftlichen Maschine verschwenkt werden sowie diese mittels Tiefenführungselemente wie bspw. Packerräder oder Tiefenführungsräder oder Tiefenführungsrollen in deren Arbeitstiefe konstant gehalten bzw. die Maschinenabschnitte entlang der Ackerfläche geführt werden.

Um eine möglichst große Schlagkraft mit solchen landwirtschaftlichen Maschinen zu erreichen, können diese mitunter große Arbeitsbreiten von sechs Meter und mehr aufweisen. Um jedoch trotzdem die länderspezifischen Verkehrsvorschriften für einen Straßentransport wie Transportbreite und Transporthöhe einzuhalten, werden diese bzw. die Maschinenabschnitte jeweils in Bezug auf ein Mittelteil entsprechend verschwenkt. Damit kann bspw. die in Deutschland erforderliche Transportbreite von maximal drei Metern und die Transporthöhe von maximal vier Metern eingehalten werden. Hierbei sind die landwirtschaftlichen Maschinen in bspw. zwei, drei oder fünf einzelne Maschinenabschnitte unterteilt, welchen Maschinenabschnitten jeweils wiederum entsprechende Arbeitswerkzeuge und Tiefenführungselemente zugeordnet sein können.

Eine Ausführungsvariante einer derartigen landwirtschaftlichen Maschine geht bspw. aus der EP 1 935 224 B1 bereits hervor. Die hier gezeigte Maschine ist als Verteilmaschine ausgeführt und dient zur Aussaat von Saatgut bzw. Dünger, wobei der Maschine zum Mitführen und Bereitstellen des Verteilguts ein Vorratsbehälter sowie diesem nachgeordnet, Säschare in Form von Zinken zugeordnet sind. Die Maschine weist ein Mittelteil auf, an welchem der Vorratsbehälter angeordnet ist, sowie jeweils schwenkbar zu diesem Mittelteil ein links von diesem und ein rechts von diesem angeordnetes Seitenteil, welchen Seitenteilen jeweils die Arbeitswerkzeuge zugeordnet sind. Um eine konstante Tiefenführung der Arbeitswerkzeuge zu erreichen, sind den Seitenteilen jeweils Tiefenführungsräder zu- bzw. den Arbeitswerkzeugen vorgeordnet. Um die landwirtschaftliche Maschine in eine Transportposition zu überführen, werden die Seitenteile in Bezug auf das Mittelteil zunächst über quer zu einer Fahrrichtung angeordneter Achsen um 90° nach oben sowie anschließend mittels nun senkrechter Achsen 90° nach vorne verschwenkt sowie die Tiefenführungsräder mittels eines Hydraulikzylinders eingezogen, wodurch eine gesetzliche Transportbreite von bspw. drei Meter eingehalten werden kann. Um eine ausreichende Tiefenführung zu erreichen, benötigen die Tiefenführungsräder eine entsprechend große Auflagefläche, was bspw. durch die Verwendung von mehreren Rädern oder durch die Verwendung von entsprechend großer Tiefenführungsräder erreicht werden kann. Dies kann aber in Verbindung mit einem Vorratsbehälter und einer seitlichen Anordnung der Seitenteile in einer Transportposition dazu führen, dass eine gesetzliche Transportbreite nicht mehr eingehalten werden kann, da sowohl der Vorratsbehälter zu Erreichung eines erforderlichen auf die Arbeitsbreite abgestimmten Verteilgutvorrats entsprechend groß gebaut sein muss, sowie ebenfalls die Arbeitswerkzeuge jeweils eine entsprechende Bauhöhe aufweisen.

Um hierbei trotzdem eine gesetzliche Transportbreite einzuhalten, sieht die landwirtschaftliche Maschine gemäß der EP 1 935 224 B1 vor, dass die Seitenteile in einer Transportposition hinter dem Vorratsbehälter angeordnet sind, wodurch jedoch das Mitteilteil entsprechend lang gebaut sein muss, was wiederum die Handhabung sowie den Straßentransport der landwirtschaftlichen Maschine erschwert. Darüber hinaus sieht die landwirtschaftliche Maschine jeweils nur ein den Arbeitswerkzeugen vorgeordnetes Tiefenführungsrad vor, wodurch keine dauerhaft exakte Tiefenführung gewährleistet werden kann. Um dem entgegenzuwirken sind den Arbeitswerkzeugen direkt separate Tiefenführungsrollen zugeordnet, wodurch jedoch wiederum die Arbeitswerkzeuge entsprechend teuer werden. Auch gibt es eine Reihe von Arbeitswerkzeugen, welchen keine Tiefenführungsrollen zugeordnet werden können. Des Weiteren ist das Tiefenführungsrad jeweils nicht schwenkbar bzw. kann dieses nicht lenken, da es starr mit dem Rahmen der landwirtschaftlichen Maschine verbunden ist. Dies hat aber den Nachteil, dass dieses bei Kurvenfahrten der landwirtschaftlichen Maschine entlang der Oberfläche zu schaben beginnt, wodurch zum einen Furchen in die Ackerfläche gezogen werden und zum anderen die Belastungen auf die Rahmenkonstruktion entsprechend steigen. Um dem entgegenzuwirken wird versucht, dass sich der Mittelpunkt der Achse eines Transportrades, welches den "Drehpunkt" der landwirtschaftlichen Maschine bildet, und die Achse des Tiefenführungsrades auf einer gemeinsamen Ebene befinden. Je größer jedoch dieser Abstand ist, desto größer ist auch der Schab- bzw. Reibeffekt. Auch deshalb ist in der somit bekannten landwirtschaftlichen Maschine eine Verwendung eines den Arbeitswerkzeugen vor- und eines den Arbeitswerkzeugen nachgeordneten Tiefenführungsrads nicht möglich.

Eine weitere Ausgestaltungsvariante einer landwirtschaftlichen Maschine geht aus der DE 10 2012 214 614 B4 hervor. Die Maschine dient insbesondere sowohl zur Bodenbearbeitung als auch zum Ausbringen von Verteilgut und ist aufgrund der großen Arbeitsbreite in fünf Maschinenabschnitte unterteilt, wobei zur Überführung der Maschine in eine Transportposition jeweils die äußersten Abschnitte um 180° zueinander geklappt werden, sowie anschließend die sich somit zwei aufeinander befindlichen Abschnitte wiederum um ca. 90° in Bezug auf das Mittelteil verschwenkt werden, um somit eine gesetzliche Transportbreite einhalten zu können. Da somit in Transportposition vier Abschnitte jeweils gegenüberliegend zueinander angeordnet sind und die Bauhöhe einzelner Elemente größer als ein Viertel der Transportbreite ist, werden einzelne Elemente in Fahrtrichtung zueinander axial verschoben. Jedoch muss auch durch eine derartige axiale Verschiebung die Baulänge entsprechend erhöht werden, was wiederum die Handhabung sowie den Straßentransport der landwirtschaftlichen Maschine erschwert. Darüber hinaus ist eine Anordnung eines Vorratsbehälters bei einer derartigen landwirtschaftlichen Maschine nicht möglich bzw. wiederum nur vor den Arbeitswerkzeugen und den verschwenkten Seitenteilen möglich.

Neben einer entsprechenden Baulänge weisen die aus dem Stand der Technik bekannten landwirtschaftlichen Maschinen darüber hinaus keine optimale Gewichtsverteilung auf, d.h. damit möglichst alle Arbeitswerkzeuge die gleiche Arbeitsqualität erreichen können, ist jeweils eine gleichmäßige Gewichtsverteilung dieser erforderlich, wobei eine derartige, aufgrund der Baulänge der bekannten Maschinen sowie einer Anordnung eines Vorratsbehälters vor den Arbeitswerkzeugen nicht erreicht wird.

Eine weitere Ausführungsform einer gezogenen landwirtschaftlichen Maschine geht aus der DE 10 2012 103 570 A1 hervor. Bei der gezogenen landwirtschaftlichen Maschine handelt es sich um ein Bodenbearbeitungsgerät, welches einen Tragrahmen mit einer in Fahrtrichtung gesehen vorderseitigen Zugvorrichtung beispielsweise in Form von einer Zugdeichsel und mit einem in Fahrtrichtung gesehen rückseitigen Fahrwerk mit Rädern ausgestattet ist. Am Tragrahmen des Bodenbearbeitungsgerätes ist der Mittelrahmen befestigt, an welchem sich beidseitig jeweils mehrere Flügelabschnitte anschließen. Am Rahmen der Flügelabschnitte sind Bodenbearbeitungswerkzeuge angeordnet, hinter welchen in Fahrtrichtung gesehen Bodenwalzen vorgesehen sind. Seitlich neben der Zugdeichsel und auf der Vorderseite des Rahmens der Flügelabschnitte sind jeweils mittels einer Schwenkhalterung Tiefenführungsräder angeordnet. Die Schwenkhalterung weist einen Schwenkbolzen auf, der in einer Schwenklagerung der Schwenkhalterung um eine schräg von hinten - oben nach vorn - unten verlaufenden Schwenkachse schwenkbar angeordnet ist. Am Schwenkbolzen ist der schräg nach unten ragende Radarm befestigt, welcher mit dem Schwenkbolzen verschwenkbar ist. Am unteren Ende des Radarms ist mittels einer eine horizontale Drehachse aufweisenden Lagerung das Tiefenführungsrad befestigt. Bei derartigen Lösungen ist zwar das Tiefenführungsrad über die Schwenkhalterung verschwenkbar, nicht jedoch dessen Befestigungsachse. Damit ist die Position des Tiefenführungsrades fest. Nachteilig ist, dass somit auch die Transportbreite nicht aktiv verändert werden kann.

Durch die DE 10 2012 102 139 A1 ist eine weitere Ausführungsform eines faltbaren landwirtschaftlichen Arbeitsgeräts beispielsweise in Form eines Bodenbearbeitungsgeräts offenbart. Das Bodenbearbeitungsgerät umfasst einen Mittelrahmen und schwenkbar an gegenüberliegenden Seiten des Mittelrahmens angebrachte Flügelabschnitte. Die beiden Flügelabschnitte bestehen aus mehreren über Gelenke bewegbar miteinander verbundenen Sektionen, welche für eine Transportposition nacheinander zusammengefaltet werden. Ein Tiefenführungsrad ist bei vorliegender Lösung weder vorgesehen noch beabsichtigt.

Durch die US 2004/0069510 A1 ist eine weitere Ausführungsform eines Bodenbearbeitungsgeräts offenbart, welches einen zentralen Rahmenabschnitt und jeweils zwei faltbare Rahmenabschnitten umfasst. Die Rahmenabschnitte sind jeweils so ausgebildet, dass diese über entsprechende Zylinder angehoben und abgesenkt und somit zwischen einer Arbeits- und Transportposition verschwenkt werden können. Dem zentralen Rahmenabschnitt sind in Fahrtrichtung gesehen vorderseitig eine Vielzahl von Tiefenführungsrädern zugeordnet. Die Tiefenführungsräder können lediglich in ihrer Höhe eingestellt werden, ein Verschwenken der Befestigungsachse der Laufräder ist nicht vorliegend vorgesehen.

Eine weitere Ausführungsform eines gezogenen landwirtschaftlichen Bodenbearbeitungsgeräts geht aus der EP 1 935 224 B1 hervor. Das Bodenbearbeitungsgerät weist einen Zentralrahmen mit einem Fahrwerk auf, von welchem Zentralrahmen sich beidseitig auseinanderfaltbare und zusammenfaltbare Seitenrahmen erstrecken. An beiden Seitenrahmen sind jeweils auf deren Vorderseite im äußeren Bereich mittels einer Schwinge über eine Gelenkanordnung als Stützelemente und Tiefenführungselemente ausgebildete Laufräder vorgesehen. Die Laufräder sind in Richtung der Seitenrahmen in einziehbarer Weise angeordnet und in der eingezogenen Position festsetzbar. Damit sind die Laufräder lediglich in ihrer Höhe verstellbar bzw. einstellbar, ein Verschwenken der Befestigungsachse der Laufräder ist hier nicht vorgesehen.

Eine weitere landwirtschaftliche Maschine mit einer Packereinheit geht aus der DE 10 2012 214 615 B4 hervor. Die landwirtschaftliche Maschine umfasst Bodenbearbeitungswerkzeuge und Packerwerkzeuge. Die Maschine ist in wenigstens drei, vorzugsweise fünf Maschinenabschnitte unterteilt. An den beiden Längsseiten eines Mittels sind jeweils Seitenteile angelenkt, die gegenüber dem Mittelteil um horizontale Längsachsen in vertikale Richtung schwenkbar sind. Durch eine gemeinsame Beweglich- und/oder Verschiebbarkeit der Packerwerkzeuge ist wenigstens eines der wenigstens zwei gegenüber dem Mittelteil verschwenkbaren Seitenteile der Maschine in einer Längsrichtung der Maschine schwenkbar. Bei dieser Lösung sind keine Tiefenführungsräder oder dergleichen vorgesehen.

Weitere bekannte landwirtschaftliche Maschinen gehen aus der US 2013/098645 A1, der US 2015/129250 A1 und der US 4 206 815 A hervor.

Der Erfindung liegt somit die Aufgabe zugrunde eine landwirtschaftliche Maschine zur Bodenbearbeitung und/oder zum Ausbringen von landwirtschaftlichen Verteilgütern zu schaffen, welche eine große Arbeitsbreite aufweist sowie in Transportposition die gesetzlichen Transportmaße einhält, dennoch kompakt gebaut ist, ohne dabei Tiefenführungselemente und/oder Arbeitswerkzeuge in deren Baugröße verringern zu müssen.

Diese Aufgaben werden erfindungsgemäß durch eine landwirtschaftliche Maschine zur Bodenbearbeitung und/oder zum Ausbringen von landwirtschaftlichen Verteilgütern mit den Merkmalen des Patentanspruchs 1 gelöst, wobei vorteilhafte Ausgestaltungen und Weiterbildungen der Erfindung aus den jeweiligen abhängigen Ansprüchen hervorgehen.

Zur Lösung der genannten Aufgaben schlägt die Erfindung eine landwirtschaftliche Maschine zur Bodenbearbeitung und/oder zum Ausbringen von landwirtschaftlichen Verteilgütern wie Saatgut, Dünger oder dergl. vor. Bei der landwirtschaftlichen Maschine kann es sich beispielsweise um eine Kombinationsmaschine handeln, mittels welcher sowohl eine Bodenbearbeitung als auch eine Aussaat von landwirtschaftlichen Verteilgütern erfolgen kann. Die landwirtschaftliche Maschine ist quer zu einer Fahrtrichtung in wenigstens drei Maschinenabschnitte unterteilt. Die landwirtschaftliche Maschine kann auch in vier oder mehr Maschinenabschnitte unterteilt sein. Seitlich, d.h. links und rechts zu einem Mittelteil sind jeweils Seitenteile angeordnet, welche bspw. bei einer Maschine mit drei Maschinenabschnitten einteilig und bei einer Maschine mit vier oder fünf Maschinenabschnitten zwei oder mehrteilig ausgebildet sein können. Bei einem mehrteiligen Seitenteil können diese zur Überführung in eine Transportposition in einem Winkel zueinander verschwenkt werden der größer als 90° ist, insbesondere jedoch ca. 180° beträgt, wodurch somit zwei Maschinenabschnitte zumindest weitgehend gegenüberliegend angeordnet sind.

Der Mittelteil kann in einem vorderen Bereich eine Zugdeichsel umfassen, mittels welcher die landwirtschaftliche Maschine mit einer Zugmaschine bspw. einem Traktor verbunden werden kann. Mittels der Zugmaschine kann die landwirtschaftliche Maschine jeweils bewegt bzw. gezogen werden, unabhängig ob diese sich in Arbeitsposition oder in Transportposition befindet. An die Zugdeichsel kann sich ein Mittelrahmen zum Tragen und Anbau der am Mitteilteil sich befindenden Bauteile und Komponenten anschließen. Dem Mittelteil kann wenigstens ein Vorratsbehälter zum Mitführen und Bereitstellen des jeweiligen Verteilguts zugeordnet sein. Um die landwirtschaftliche Maschine zu transportieren, können in einem hinteren Bereich des Mitteilteils Lauf- bzw. Transporträder angebracht sein.

Die Seitenteile sind jeweils um horizontale bspw. parallel zur Fahrrichtung verlaufende Längsachsen schwenkbar zum Mittelteil angeordnet, wobei in einer Arbeitsposition der landwirtschaftlichen Maschine die Seitenteile weitgehend waagerecht zum Mittelteil verschwenkt sind, was bspw. einem Winkel von 0° entspricht und/oder einem Schwenkbereich von bspw. -10° bis +10° entsprechen kann. Zum Verschwenken der Seitenteile zum Mittelteil können zusätzliche Stellmittel bspw. hydraulisch, elektrisch oder pneumatisch arbeitende Zylinder, beispielsweise Klappzylinder, vorgesehen sein. Durch diesen Schwenkbereich kann eine bessere Konturanpassung der landwirtschaftlichen Maschine erreicht werden, wobei dies insbesondere bei landwirtschaftlichen Maschinen mit einer großen Arbeitsbreite von Vorteil ist. In einer Transportposition der landwirtschaftlichen Maschine sind die Seitenteile weitgehend senkrecht zum Mittelteil verschwenkt, was bspw. einem Winkel von 90° entspricht und oder einem Winkel von bspw. 85° bis 95° entspricht, wobei der Winkel jeweils derartig gewählt ist, dass eine gesetzliche bzw. gewünschte Transportbreite eingehalten wird.

Zur Bodenbearbeitung und/oder zum Ausbringen des Verteilguts sind den Seitenteilen und/oder dem Mittelteil verschiedenste Arbeitswerkzeuge wie Zinken und/oder Sechscheiben und/oder Säschare und/oder dergl. zugeordnet, welche bspw. wiederum mittels quer zur Fahrtrichtung angeordneter Achsen drehbar an den Seitenteilen und/oder einem Rahmenabschnitt der Seitenteile und/oder an einem dem Mittelteil zugeordneten Mittelrahmen angeordnet sein können, um somit bspw. eine Variation der Arbeitstiefe zu erreichen, aber auch um die Arbeitswerkzeuge in eine Position verschwenken zu können, welche für einen Straßentransport benötigt wird, um somit die Transportbreite einhalten zu können. Hierbei ist jedem Seitenteil zumindest ein Tiefenführungselement, insbesondere in Form eines Tiefenführungsrads, zugeordnet, um eine gewünschte Arbeitstiefe bzw. einen Schwenkwinkel zwischen Mittelteil und Seitenteil in einer Arbeitsposition weitgehend konstant zu halten, sowie um eine Anpassung der Seitenteile an eine Bodenkontur zu erhalten.

Das Tiefenführungselement kann hierbei sowohl als Tiefenführungsrad oder als Tiefenführungsrolle ausgeführt sein. Auch kann das Tiefenführungselement sowohl als Einzelelement bzw. Einzelrad oder Einzelrolle als auch als Doppelelement bzw. als Doppelrad oder Doppelrolle ausgeführt sein. Auch kann das Tiefenführungselement als Walze ausgeführt sein und sich aus einer Mehrzahl von Räder oder Rollen sich zusammensetzen. Die Tiefenführungselemente könnten jeweils über in Arbeitsposition quer zur Fahrtrichtung orientierter Achsen rotierend gelagert sein. Auch können bei Ausführung der Tiefenführungselemente als Doppelrad oder Doppelrolle diese als Tandem ausgeführt sein. Als Tiefenführungselemente können neben Räder oder Rollen auch andere Elemente Verwendung finden, welche eine ausreichende Stabilität zur Tiefenführung aufweisen. Hierzu gehören bspw. Gummiringe, Packerringe, Kunststoffringe oder dergl.

Um ein für eine exakte bzw. konstante Tiefenführung benötigtes Tiefenführungselement mit entsprechend großem Durchmesser bzw. Querschnitt verwenden zu können, jedoch trotzdem eine gesetzliche Transportbreite einzuhalten und zugleich eine kompakte Maschine zu schaffen, ist vorgesehen, dass das Tiefenführungselement um eine unabhängig von der Position der landwirtschaftlichen Maschine parallel oder in einem Winkel der kleiner als 90° zur Fahrtrichtung ist, orientierten Achse gelagert ist und jeweils in Bezug auf die Seitenteile verschwenkbar ist, wobei das Tiefenführungselement in einer Arbeitsposition senkrecht bzw. zumindest weitgehend senkrecht zum Seitenteil angeordnet ist, was einem Winkel von 90° entspricht und wobei das Tiefenführungselement in einer Transportposition derartig zum Seitenteil verschwenkbar ist, dass dieses einen Winkel im Bezug zum Seitenteil aufweist, der kleiner als 90°sein kann, bspw. jedoch kleiner oder gleich 80° oder kleiner oder gleich 60° oder kleiner oder gleich 50° sein kann, so dass das Tiefenführungselement diagonal zum Seitenteil angeordnet ist.

Das Tiefenführungselement bzw. das Tiefenführungsrad kann den an den Seitenteilen zugeordneten Arbeitswerkzeugen vorgeordnet, aber auch nachgeordnet sein. Auch kann das Tiefenführungselement zwischen den Arbeitswerkzeugen angebracht sein. Auch wäre es denkbar, dass den Arbeitswerkzeugen sowohl ein Tiefenführungselement vor- als auch nachgeordnet ist. Um den Montageaufwand bei einer derartigen Ausführungsform möglichst gering zu halten, kann vorgesehen sein, dass das den Arbeitswerkzeugen vorgeordnete sowie das den Arbeitswerkzeugen nachgeordnete Tiefenführungselement an einem gemeinsamen Träger montiert sind, welcher Träger mittels einer parallel oder in einem Winkel der kleiner als 90° zur Fahrtrichtung ist, orientierten Achse gelagert ist und jeweils in Bezug auf die Seitenteile verschwenkt werden kann.

Gemäß einem Ausführungsbeispiel können für eine exakte und gleichmäßige Tiefenführung der Maschinenabschnitte sowie deren zugeordneter Arbeitswerkzeuge den Seitenteilen jeweils Tiefenführungselemente in Form von Tiefenführungsräder zugeordnet bzw. den Arbeitswerkzeugen jeweils Tiefenführungselemente in Form von Tiefenführungsräder vor- und nachgeordnet sein. Die Tiefenführungsräder können wiederum an einem gemeinsamen Träger montiert sein. Auch können die den Arbeitswerkzeugen vorgeordneten Tiefenführungsräder jeweils um eine senkrechte Drehachse frei drehbar gelagert sein.

Um die Maschine transportieren zu können, können am Mittelteil darüber hinaus Laufräder bzw. Transporträder angeordnet sein, welche bspw. in einer Arbeitsposition nicht oder nur teilweise mit der Ackerfläche in Kontakt sind, in einer Transportposition jedoch schon. Hierbei kann die landwirtschaftliche Maschine bspw. bei einer Vorgewendefahrt bzw. einer Kurvenfahrt um diese bzw. zumindest um das sich im Kurveninneren befindende Transportrad rotieren. Um bei einer derartigen Kurvenfahrt der landwirtschaftlichen Maschine ein sog. Radieren der Tiefenführungselemente und somit auch die auf diese wirkenden Kräfte zu minimieren, kann vorgesehen sein, dass zumindest das den Arbeitswerkzeugen vorgeordnete Tiefenführungselement frei drehbar gelagert ist, wobei die Drehachse hierzu bspw. senkrecht verlaufen kann, aber auch schräg von hinten - oben nach vorne - unten ausgerichtet sein kann, wodurch insbesondere die Laufruhe verbessert werden kann sowie ein Versatz zwischen der Achse der Transporträder sowie der Achse der Tiefenführungselemente ausgeglichen werden kann. In einer bevorzugten Ausführungsvariante kann vorgesehen sein, dass das den Arbeitswerkzeugen nachgeordnete Tiefenführungsrad bzw. dessen Achse auf einer gemeinsamen Ebene der Achse der Transporträder liegt, wodurch dieses Radieren wiederum unterbunden werden kann. In einer derartigen Ausführung muss das den Arbeitswerkzeugen nachgeordnete Tiefenführungselement nicht um eine senkrechte Drehachse bzw. um eine schräg von vorne - oben nach hinten - unten verlaufende Drehachse drehbar sein. Befinden sich die Achse der Transporträder sowie die Achse der Tiefenführungselemente jedoch nicht in einer Ebene, so kann auch das den Arbeitswerkzeugen nachgeordnete Tiefenführungsrad um eine entsprechende Drehachse drehbar gelagert sein.

Um bei einer landwirtschaftlichen Maschine zur Aussaat von landwirtschaftlichen Verteilgütern das jeweilige Verteilgut mitzuführen bzw. bereitzustellen, kann an der Maschine ein Vorratsbehälter angebracht sein, wobei dieser wiederum am Mittelteil angeordnet, bzw. an diesem angebaut ist. Dabei sind die Seitenteile in einer Transportposition jeweils seitlich bzw. neben diesem Vorratsbehälter angeordnet. Insbesondere kann vorgesehen sein, dass das den Arbeitswerkzeugen vorgeordnete Tiefenführungselement vor dem Vorratsbehälter und/oder seitlich zu diesem angeordnet ist, sowie, insofern vorhanden, dass den Arbeitswerkzeugen nachgeordnete Tiefenführungselement hinter dem Vorratsbehälter und/oder seitlich zu diesem angebracht ist, jeweils in Bezug auf die Fahrrichtung. Dies kann auch dahingehend von Vorteil sein, dass ein Schwenkwinkel der Tiefenführungselemente in Bezug auf die Seitenteile nicht zwingend begrenzt werden muss. Um eine verbesserte Gewichtsverteilung der landwirtschaftlichen Maschine zu erhalten, kann vorgesehen sein, dass die Seitenteile sich in einer Transportfahrt in deren gesamter Erstreckung neben dem Vorratsbehälter befinden bzw. der Vorratsbehälter sich in dessen gesamter Erstreckung zwischen den Seitenteilten befindet.

Des Weiteren kann vorgesehen sein, dass das Schwenken der Tiefenführungselemente in Bezug auf das Seitenteil mittels eines Antriebs erfolgt, welcher bspw. in Form eines elektrischen und/oder hydraulischen und/oder pneumatischen Linearantriebes oder Schwenkantriebes oder dergl. Antriebselementes ausgebildet sein kann. Wahlweise kann dies auch mittels Schwerkraft erfolgen, wobei hierbei der Schwerpunkt des Tiefenführungselements bzw. des Trägers oder der Tiefenführungselemente so gewählt ist, dass diese in Arbeitsposition in Bezug auf die Seitenteile eine waagerechte Position einnehmen sowie in Transportposition einen Winkel einnehmen kann, der kleiner ist als 90° insbesondere kleiner oder gleich wie 80° oder 60° oder 50° ist, bzw. dass diese entsprechend diagonal zum Seitenteil verschwenkt werden. Dieser Winkel kann unter anderem von der Position des Schwerpunkts, aber auch vom jeweiligen Winkel zwischen dem Mittelteil und dem Seitenteil abhängig sein, sowie vom Durchmesser des jeweiligen Tiefenführungselements abhängig sein.

Zur Begrenzung des Winkels zwischen dem Tiefenführungsrad und dem Seitenteil kann ein Anschlagelement vorgesehen sein. Es kann aber auch der Verfahrweg des Antriebs durch ein diesem zugeordnetes Anschlagelement begrenzt werden. Das Anschlagelement kann insbesondere dazu dienen, um eine freie Beweglichkeit der Tiefenführungselemente in einer Transportposition zu begrenzen, um somit auch vermeiden zu können, dass die landwirtschaftliche Maschine durch eine Bewegung der Tiefenführungselemente kurzzeitig die gesetzliche Transportbreite übersteigt.

Die landwirtschaftliche Maschine kann darüber hinaus mit einem Steuerungssystem ausgestattet sein, mittels welchem bspw. die Elemente zum Verschwenken der Seitenteile zum Mittelteil aber auch andere Elemente der landwirtschaftlichen Maschine angesteuert werden können. Insbesondere kann das Steuerungssystem so ausgeführt sein, dass ein Verschwenken der Tiefenführungselemente automatisch und zeitgleich oder zeitlich zueinander versetzt mit dem Verschwenken der Seitenteile zum Mittelteil erfolgt. Hierbei kann das Steuerungssystem hierfür bspw. als hydraulisches und/oder elektrisches und/oder pneumatisches Steuerungssystem ausgeführt sein. Auch wäre es denkbar, dass eine Kombination dieser Systeme Verwendung findet, bspw. ein elektrohydraulisches System. Um dieses System zu verbessern, können bspw. Sensoren oder dergl. Positionserkennungsmittel an der landwirtschaftlichen Maschine angebracht sein, mittels derer bspw. ein Winkel zwischen Seitenteil und Mittelteil und/oder zwischen Seitenteil und Tiefenführungselement ermittelt bzw. erfasst wird, welche Positionen wiederum im Steuerungssystem mit verarbeitet werden können.

Zusammenfassend werden nachfolgend wichtige Aspekte der Erfindung dargestellt. Gemäß einem Ausführungsbeispiel kann die landwirtschaftliche Maschine drei Maschinenabschnitte aufweisen, umfassend ein Mitteilteil sowie links und rechts zu diesem angeordnet jeweils Seitenteile. Die Seitenteile können jeweils um horizontale bzw. parallel zur Fahrtrichtung verlaufende Längsachsen schwenkbar zum Mittelteil angeordnet sein. Das Mittelteil kann zunächst in einem vorderen Bereich eine Zugdeichsel umfassen, mittels welcher die landwirtschaftliche Maschine mit einer Zugmaschine bspw. einem Traktor verbunden werden kann, mit welcher Zugmaschine die landwirtschaftliche Maschine jeweils bewegt bzw. gezogen wird, unabhängig ob diese sich in Arbeitsposition oder in Transportposition befindet. An die Zugdeichsel kann sich ein Mittelrahmen zum Tragen und Anbau der am Mitteilteil sich befindenden Bauteile und Komponenten anschließen. Dem Mittelteil kann wenigstens ein Vorratsbehälter zum Mitführen und Bereitstellen des jeweiligen Verteilguts zugeordnet sein. Um die landwirtschaftliche Maschine transportieren zu können, sind in einem hinteren Bereich des Mitteilteils noch Lauf- bzw. Transporträder angebracht. Dem Mitteilteil sowie den Seitenteilen können jeweils Arbeitswerkzeuge in Form von Sechscheiben, welche zur Bodenbearbeitung dienen, als auch Säschare, welche zum Ausbringen bzw. zur Ablage des mittels des Vorratsbehälters bereitgestellten Verteilguts dienen, zugeordnet sein. Die Arbeitswerkzeuge können jeweils mittels quer zur Fahrtrichtung verlaufender Achsen drehbar an den Seitenteilen und/oder einem Rahmenabschnitt der Seitenteile sowie am Mittelrahmen angeordnet sein, um somit bspw. eine Variation der Arbeitstiefe zu erreichen, sowie die Arbeitswerkezuge in eine für eine Transportfahrt bzw. Transportbreite erforderliche Position zu bringen. Diese Verdrehung kann bspw. mittels hydraulischer, pneumatischer oder elektrischer Zylinder erfolgen. Vorzugsweise können zum Verschwenken der Seitenteile gegenüber dem Mittelteil zwischen diesen zusätzliche Stellmittel bspw. hydraulisch, elektrisch oder pneumatisch arbeitende Zylinder, beispielsweise Klappzylinder, vorgesehen sein.

Um eine exakte bzw. gleichmäßige Tiefenführung der Maschinenabschnitte sowie deren zugeordneter Arbeitswerkzeuge zu erreichen, können jeweils Tiefenführungselemente in Form von Tiefenführungsräder den Seitenteilen zugeordnet bzw. den Arbeitswerkzeugen vor- und nachgeordnet sein. Die Tiefenführungsräder können an einem gemeinsamen Träger montiert sein. Auch können die den Arbeitswerkzeugen vorgeordneten Tiefenführungsräder jeweils um eine senkrechte Drehachse frei drehbar gelagert sein.

Gemäß einem Ausführungsbeispiel kann bei einer landwirtschaftlichen Maschine in einer Arbeitsposition der Winkel des Tiefenführungselements in Bezug auf das Seitenteil 90° umfassen, d.h. das Tiefenführungselement kann in Arbeitsposition eine senkrechte Ausrichtung in Bezug auf das jeweilige Seitenteil aufweisen. Die Seitenteile können des Weiteren mittels der Klappzylinder waagerecht zum Mittelteil verschwenkt werden, was bspw. einem Winkel von 0° entspricht, wobei diese auch einen Schwenkbereich aufweisen können und jeweils um bspw. 10° nach unten und oben in Arbeitsposition verschwenkt werden können, wobei dies durch eine Konturanpassung der Seitenteile mittels der Tiefenführungselemente erfolgen kann.

Gemäß einem Ausführungsbeispiel kann die landwirtschaftlichen Maschine in eine Transportposition verschwenkt werden, wobei die Steilenteile jeweils in eine weitgehend senkrechte Position in Bezug auf das Mittelteil verschwenkt werden, so dass sich zwischen den Seitenteilen und dem Mittel ein Winkel ergibt, der beispielsweise größer oder gleich 90° ist. Es wäre jedoch auch denkbar, dass dieser Winkel einen Bereich von bspw. 85° bis 95° einnehmen kann, wobei der Winkel jeweils in Abhängigkeit der Transportbreite variieren kann.

Um ein möglichst groß dimensioniertes Tiefenführungselement verwenden zu können und trotzdem eine gesetzliche Transportbreite einhalten zu können, kann vorgesehen sein, dass die Tiefenführungselemente bzw. der Träger über eine unabhängig von der Position der landwirtschaftlichen Maschine parallel zur Fahrtrichtung orientierten Achse gelagert ist und über diese verschwenkt werden kann, wobei diese Achse auch schräg zur Fahrtrichtung ausgerichtet sein könnte.

Bei einer noch nicht verschwenkten Position des Tiefenführungselementes in Bezug auf das Seitenteil, kann sich ein Winkel von beispielsweise 90° ergeben, während in einer verschwenkten Position des Tiefenführungselements in Bezug auf das Seitenteil sich ein Winkel ergibt, welcher kleiner als 90° ist und insbesondere ca. 50° beträgt. Der Winkel kann grundsätzlich so gewählt sein, dass eine gesetzlich vorgeschriebene Transportbreite eingehalten werden kann bzw. dass das Tiefenführungselement diagonal zum Seitenteil verschwenkt werden kann.

Zum Verschwenken der Tiefenführungsräder kann ein Antrieb bspw. in Form eines Linearantriebs vorgesehen sein. Der Antrieb kann mit einem um eine Achse schwenkbaren Träger verbunden sein, an welchem Träger zumindest ein Tiefenführungselement angebracht ist. Durch eine Längenänderung des Antriebs kann der Träger in eine gewünschte Stellung verschwenkt werden. Zur Begrenzung des Schwenkweges kann ein Anschlagelement vorgesehen sein, wobei insbesondere zur Begrenzung des Schwenkweges auch der Verfahrweg des Antriebs begrenzt werden könnte. Der Antrieb kann als hydraulisch arbeitender Zylinder ausgeführt, wobei jedoch auch andere Antriebe verwendet werden könnten bspw. pneumatisch oder elektrisch arbeitende Linearantriebe oder Schwenkantrieb oder dergl.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen hierbei nicht immer den realen Größenverhältnissen, da einige Formen vereinfacht und andere Formen zur besseren Veranschaulichung vergrößert im Verhältnis zu anderen Elementen dargestellt sind. Hierbei zeigen:
- Figur 1: eine Perspektivansicht einer Ausführungsvariante einer landwirtschaftlichen Maschine in Arbeitsposition.
- Figur 2: eine Vorderansicht einer Ausführungsvariante einer landwirtschaftlichen Maschine in Arbeitsposition gemäß Figur 1.
- Figur 3A: eine Vorderansicht einer landwirtschaftlichen Maschine gemäß Figur 1 in Transportposition mit nicht verschwenkten Tiefenfü hrungselementen.
- Figur 3B: eine Vorderansicht einer landwirtschaftlichen Maschine gemäß Figur 1 in Transportposition mit verschwenkten Tiefenführungselementen.
- Figur 4A & 4B: zwei Detailansichten eines Schwenkmechanismus zum Verschwenken von Tiefenführungselementen.

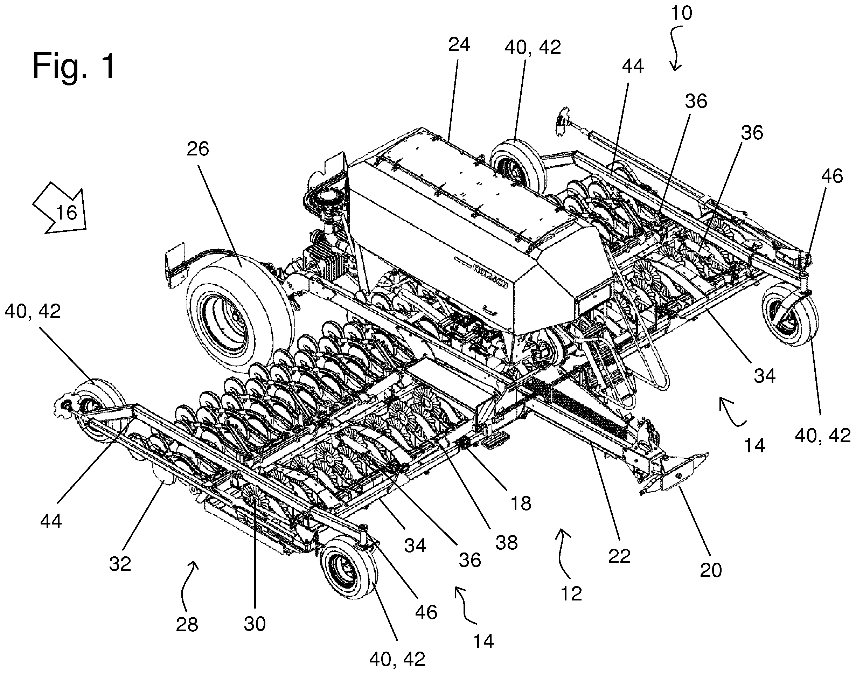

Für gleiche oder gleich wirkende Elemente der Erfindung werden in den Figuren 1 bis 4 jeweils gleiche Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße landwirtschaftliche Maschine ausgestaltet sein kann und stellen keine abschließende Begrenzung dar.

Eine Ausführungsvariante einer erfindungsgemäßen landwirtschaftlichen Maschine 10 geht aus der Perspektivansicht der Figur 1 hervor. Die landwirtschaftliche Maschine 10 ist hierbei als Kombinationsmaschine ausgeführt, mittels welcher sowohl eine Bodenbearbeitung als auch eine Aussaat von landwirtschaftlichen Verteilgütern erfolgen kann und diese in einer Arbeitsposition dargestellt ist. Die landwirtschaftliche Maschine 10 weist drei Maschinenabschnitte auf, umfassend ein Mitteilteil 12 sowie links und rechts zu diesem angeordnet jeweils Seitenteile 14; 14'. Die Seitenteile 14; 14' sind jeweils um horizontale bzw. parallel zur Fahrtrichtung 16 verlaufende Längsachsen 18 schwenkbar zum Mittelteil 12 angeordnet. Das Mittelteil 12 umfasst zunächst in einem vorderen Bereich eine Zugdeichsel 20, mittels welcher die landwirtschaftliche Maschine 10 mit einer hier nicht dargestellten Zugmaschine bspw. einem Traktor verbunden werden kann, mit welcher Zugmaschine die landwirtschaftliche Maschine jeweils bewegt bzw. gezogen wird, unabhängig ob diese sich in Arbeitsposition oder in Transportposition befindet. An die Zugdeichsel 20 schließt ein Mittelrahmen 22 zum Tragen und Anbau der am Mitteilteil 12 sich befindenden Bauteile und Komponenten an. Dem Mittelteil 12 ist wenigstens ein Vorratsbehälter 24 zum Mitführen und Bereitstellen des jeweiligen Verteilguts zugeordnet. Um die landwirtschaftliche Maschine 10 transportieren zu können, sind in einem hinteren Bereich des Mitteilteils 12 noch Lauf- bzw. Transporträder 26 angebracht.

Dem Mitteilteil 12 sowie den Seitenteilen 14; 14' sind jeweils Arbeitswerkzeuge 28 in Form von Sechscheiben 30, welche zur Bodenbearbeitung dienen als auch Säschare 32, welche zum Ausbringen bzw. zur Ablage des mittels des Vorratsbehälters 24 bereitgestellten Verteilguts dienen zugeordnet. Die Arbeitswerkzeuge 28 sind jeweils mittels quer zur Fahrrichtung 16 verlaufender Achsen drehbar an den Seitenteilen 14; 14' und/oder einem Rahmenabschnitt 34; 34' der Seitenteile 14 sowie am Mittelrahmen 22 angeordnet, um somit bspw. eine Variation der Arbeitstiefe zu erreichen, sowie die Arbeitswerkezuge 28 in eine für eine Transportfahrt bzw. Transportbreite erforderliche Position zu bringen. Diese Verdrehung kann bspw. mittels hydraulischer Zylinder 36 erfolgen.

Zum Verschwenken der Seitenteile 14; 14' zum Mittelteil 12 sind zwischen diesen noch zusätzliche bspw. hydraulisch arbeitende Klappzylinder 38 zugeordnet, wobei dies auch pneumatische oder elektrische Antriebe bzw. Klappzylinder 38 sein könnten.

Um eine exakte bzw. gleichmäßige Tiefenführung der Maschinenabschnitte sowie deren zugeordneter Arbeitswerkzeuge 28 zu erreichen, sind den Seitenteilen 14; 14' zugeordnet bzw. den Arbeitswerkzeugen 28 vor- und nachgeordnet jeweils Tiefenführungselemente 40 in Form von Tiefenführungsräder 42, wobei diese wiederum an einem gemeinsamen Träger 44 montiert sind, wobei die den Arbeitswerkzeugen 28 vorgeordneten Tiefenführungsräder 42 jeweils um eine senkrechte Drehachse 46 frei drehbar gelagert sind.

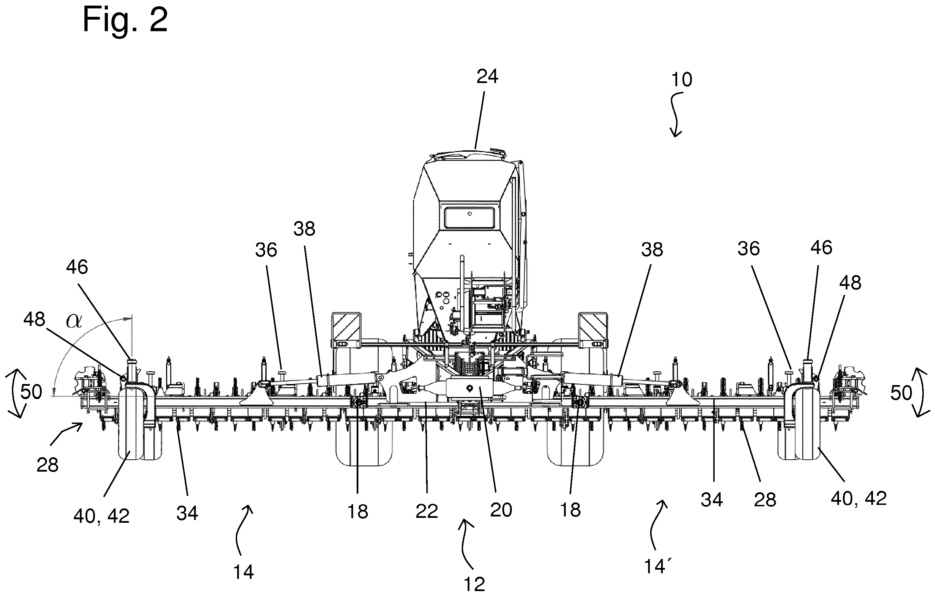

Eine Vorderansicht der landwirtschaftlichen Maschine 10 gemäß der Figur 1 zeigt die Figur 2, wobei auch diese wiederum in einer Arbeitsposition dargestellt ist. Die landwirtschaftliche Maschine 10 weist hierbei drei Maschinenabschnitte auf, umfassend ein Mitteilteil 12 sowie links und rechts zu diesem angeordnet jeweils Seitenteile 14; 14'. Die Seitenteile 14; 14' sind jeweils um horizontale bzw. parallel zur Fahrtrichtung 16 verlaufende Längsachsen 18 schwenkbar zum Mittelteil 12 angeordnet. An eine Zugdeichsel 20 schließt ein Mittelrahmen 22 zum Tragen und Anbau der am Mitteilteil 12 sich befindenden Bauteile und Komponenten an. Dem Mittelteil 12 ist wenigstens ein Vorratsbehälter 24 zum Mitführen und Bereitstellen des jeweiligen Verteilguts zugeordnet. Um die landwirtschaftliche Maschine 10 transportieren zu können, sind in einem hinteren Bereich des Mitteilteils 12 Lauf- bzw. Transporträder 26 angebracht.

Dem Mitteilteil 12 sowie den Seitenteilen 14; 14' sind jeweils Arbeitswerkzeuge 28 zugeordnet, wobei die Arbeitswerkzeuge 28 jeweils mittels quer zur Fahrrichtung 16 verlaufender Achsen drehbar an den Seitenteilen 14; 14' und/oder einem Rahmenabschnitt 34; 34' der Seitenteile 14 sowie am Mittelrahmen 22 angeordnet sind, um somit bspw. eine Variation der Arbeitstiefe zu erreichen. Diese Verdrehung kann bspw. mittels hydraulischer Zylinder 36 erfolgen.

Zum Verschwenken der Seitenteile 14; 14' zum Mittelteil sind zwischen diesen noch zusätzliche bspw. hydraulisch arbeitende Klappzylinder 38 zugeordnet, wobei dies auch pneumatische oder elektrische Antriebe bzw. Klappzylinder 38 sein könnten.

Um eine exakte bzw. gleichmäßige Tiefenführung der Maschinenabschnitte sowie deren zugeordneter Arbeitswerkzeuge 28 zu erreichen, sind den Seitenteilen 14; 14' zugeordnet bzw. den Arbeitswerkzeugen 28 vor- und nachgeordnet jeweils Tiefenführungselemente 40 in Form von Tiefenführungsräder 42, wobei diese wiederum an einem gemeinsamen Träger 44 montiert sind, wobei die den Arbeitswerkzeugen 28 vorgeordneten Tiefenführungsräder 42 jeweils um eine senkrechte Drehachse 46 frei drehbar gelagert sind.

Wie aus der Figur 2 ersichtlich, ist in der dargestellten Arbeitsposition der landwirtschaftlichen Maschine 10 der Winkel α des Tiefenführungselements 40 in Bezug auf das Seitenteil 14; 14' 90°, d.h. das Tiefenführungselement 40 hat in Arbeitsposition eine senkrechte Ausrichtung in Bezug auf das jeweilige Seitenteil 14; 14'. Die Seitenteile 14; 14' sind des Weiteren mittels der Klappzylinder 38 waagerecht zum Mittelteil 12 verschwenkt, was bspw. einem Winkel von 0° entspricht, wobei diese auch einen Schwenkbereich 48 aufweisen können und jeweils um bspw. 10° nach unten und oben in Arbeitsposition verschwenkt werden können, wobei dies durch eine Konturanpassung der Seitenteile 14; 14' mittels der Tiefenführungselemente 40 erfolgt.

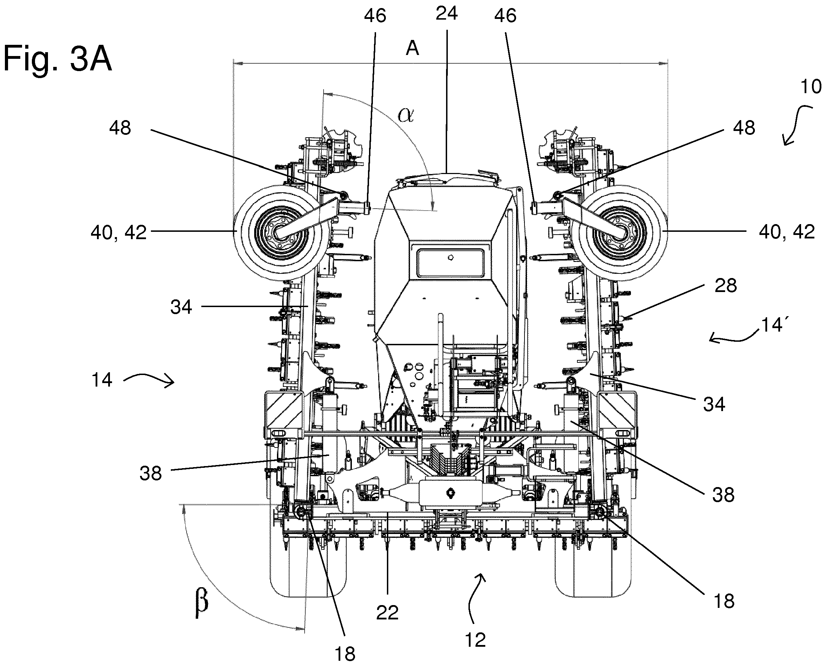

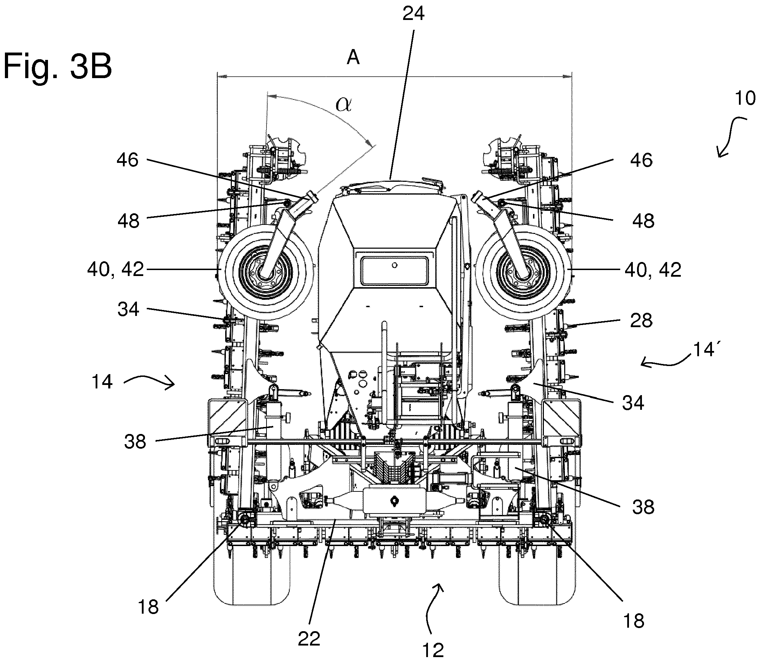

Eine Ausführungsvariante der landwirtschaftlichen Maschine 10 gemäß der Figuren 1 und 2 in Transportposition geht aus den Figuren 3A und 3B hervor. Hierbei wurden die Seitenteile 14; 14' jeweils in eine weitgehend senkrechte Position in Bezug auf das Mittelteil 12 verschwenkt, so dass sich ein Winkel β zwischen den Seitenteilen 14; 14' und dem Mittelteil 12 ergibt der bspw. größer oder gleich 90° ist. Es wäre jedoch auch denkbar, dass dieser Winkel β einen Bereich von bspw. 85° bis 95° einnehmen kann, wobei der Winkel β jeweils in Abhängigkeit der Transportbreite variieren kann.

Um ein möglichst groß dimensioniertes Tiefenführungselement 40 verwenden zu können und trotzdem eine gesetzliche Transportbreite A einhalten zu können, ist vorgesehen, dass die Tiefenführungselemente 40 bzw. der Träger 44 über eine unabhängig von der Position der landwirtschaftlichen Maschine 10 parallel zur Fahrtrichtung orientierten Achse 48 gelagert ist und über diese verschwenkt werden kann, wobei diese Achse 48 auch schräg zur Fahrtrichtung ausgerichtet sein könnte. So zeigt die Figur 3A hierbei eine noch nicht verschwenkte Position des Tiefenführungselements 40 in Bezug auf das Seitenteil 14; 14', wobei der Winkel α hierbei bspw. 90° beträgt sowie die Figur 3B eine verschwenkte Position des Tiefenführungselements 40 in Bezug auf das Seitenteil 14, 14', wobei der Winkel α hierbei kleiner als 90° ist und insbesondere ca. 50° beträgt, wobei der Winkel α hierbei so gewählt ist, dass eine gesetzlich vorgeschriebene Transportbreite eingehalten werden kann bzw. dass das Tiefenführungselement 40 diagonal zum Seitenteil 14; 14' verschwenkt wird.

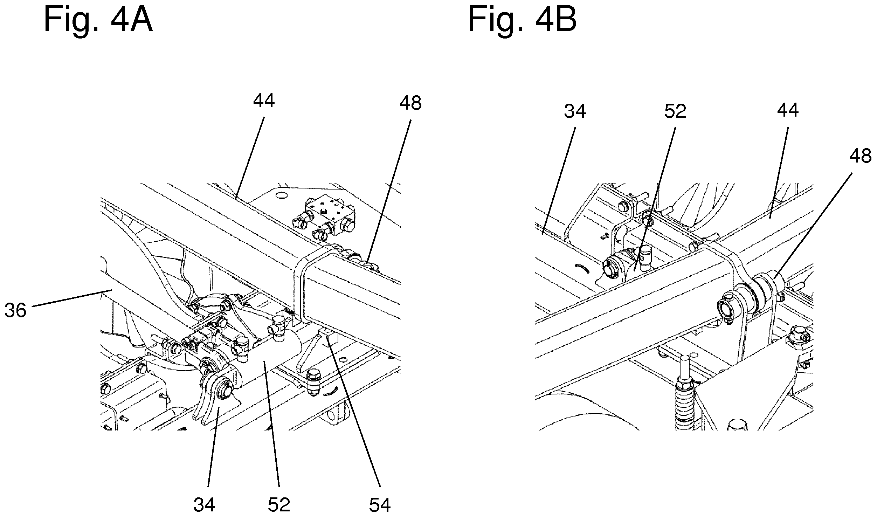

Zum Verschwenken der Tiefenführungsräder kann ein Antrieb 52 bspw. in Form eines Linearantriebs 52 vorgesehen sein, wobei die Figuren 4A und 4B ein Ausführungsbeispiel eines derartigen Linearantriebs 52 zeigen. Der Antrieb 52 ist mit einem um eine Achse 48 schwenkbaren Träger 44 verbunden, an welchem Träger 44 zumindest ein hier nicht dargestelltes Tiefenführungselement 40 angebracht ist. Durch eine Längenänderung des Antriebs 52 kann der Träger 44 in eine gewünschte Stellung verschwenkt werden. Zur Begrenzung des Schwenkweges ist ein Anschlagelement 54 vorgesehen, wobei insbesondere zur Begrenzung des Schwenkweges auch der Verfahrweg des Antriebs 52 begrenzt werden könnte. Der Antrieb 52 ist im Ausführungsbeispiel der Figuren 4A und 4B als hydraulisch arbeitender Zylinder ausgeführt, wobei jedoch auch andere Antriebe verwendet werden könnten bspw. pneumatisch oder elektrisch arbeitende Linearantriebe oder Schwenkantrieb oder dergl.

Die Erfindung wurde unter Bezugnahme auf eine bevorzugte Ausführungsform beschrieben. Es ist jedoch für den Fachmann vorstellbar, dass Abwandlungen oder Änderungen der bevorzugten Ausführungsform der Erfindung gemacht werden können, ohne dabei den Schutzbereich der nachstehenden Ansprüche zu verlassen.

### Bezugszeichenliste

- 10: Landwirtschaftliche Maschine
- 12: Mittelteil
- 14; 14': Seitenteil
- 16: Fahrtrichtung
- 18: Längsachse
- 20: Zugdeichsel
- 22: Mittelrahmen
- 24: Vorratsbehälter
- 26: Transporträder
- 28: Arbeitswerkzeuge
- 30: Sechscheibe
- 32: Säschar
- 34: Rahmenabschnitt
- 36: Zylinder
- 38: Klappzylinder
- 40: Tiefenführungselement
- 42: Tiefenführungsrad
- 44: Träger
- 46: Drehachse
- 48: Achse
- 50: Schwenkbereich
- 52: Antrieb
- 54: Anschlagselement

- A: Transportbreite
- α: Winkel zwischen Tiefenführungsrad und Seitenteil
- β: Winkel zwischen Seitenteil und Mittelteil

## Patentansprüche

1. Landwirtschaftliche Maschine (10) zur Bodenbearbeitung und/oder zum Ausbringen von landwirtschaftlichem Verteilgut, welche quer zu einer Fahrtrichtung (16) in wenigstens drei Maschinenabschnitte unterteilt ist, wobei seitlich zu einem Mittelteil (12) jeweils Seitenteile (14; 14') angeordnet sind, die gegenüber dem Mittelteil (12) um horizontale Längsachsen (18) schwenkbar sind, wobei in einer Arbeitsposition der landwirtschaftlichen Maschine (10) die Seitenteile (14; 14') zumindest weitgehend waagerecht zum Mittelteil (12) verschwenkt sind, und wobei in einer Transportposition der landwirtschaftlichen Maschine (10) die Seitenteile (14, 14') zumindest weitgehend senkrecht zum Mittelteil (12) verschwenkt sind, wobei jedem Seitenteil (14; 14') zumindest ein Tiefenführungselement (40) zugeordnet ist, welches als Tiefenführungsrad ausgebildet ist, wobei zumindest den Seitenteilen (14; 14') Arbeitswerkzeuge (28) zugeordnet sind und
- diesen das als Tiefenführungsrad ausgebildete Tiefenführungselement (40) vorgeordnet ist und/oder
- diesen das als Tiefenführungsrad ausgebildete Tiefenführungselement (40) nachgeordnet ist und hierbei zudem auf einer gemeinsamen Ebene mit einer Achse von Transporträdern der landwirtschaftlichen Maschine (10) liegt **dadurch gekennzeichnet, dass**
das jeweilige Tiefenführungselement (40) um eine unabhängig von der Position der landwirtschaftlichen Maschine (10) parallel zur Fahrtrichtung (16) oder in einem Winkel, der kleiner als 90° zur Fahrtrichtung (16) ist, orientierte Achse (48) schwenkbar am jeweiligen Seitenteil (14, 14') gelagert ist und in Bezug auf die Seitenteile (14; 14') um die Achse (48) verschwenkbar ist, wobei
das jeweilige Tiefenführungselement (40) in einer Arbeitsposition senkrecht und/oder zumindest weitgehend senkrecht zum Seitenteil (14; 14') angeordnet ist, und wobei das Tiefenführungselement (40) in einer Transportposition derartig verschwenkbar ist, dass die Drehachse (46) des Tiefenführungselements (40) diagonal zum Seitenteil (14; 14') angeordnet ist, wobei in der Arbeitsposition das Tiefenführungselement (40) über eine senkrechte Drehachse (46) frei drehbar gelagert ist.

2. Landwirtschaftliche Maschine nach Anspruch 1, **dadurch gekennzeichnet, dass** zumindest den Seitenteilen (14; 14') Arbeitswerkzeuge (28) zugeordnet sind und zwischen diesen ein Tiefenführungselement (40) angeordnet ist.

3. Landwirtschaftliche Maschine nach Anspruch 1, **dadurch gekennzeichnet, dass** das den Arbeitswerkzeugen (28) vorgeordnete sowie das den Arbeitswerkzeugen (28) nachgeordnete Tiefenführungselement (40) an einem gemeinsamen Träger (44) montiert sind, welcher Träger (44) mittels einer unabhängig von der Position der landwirtschaftlichen Maschine (10) parallel oder in einem Winkel, der kleiner als 90° zur Fahrtrichtung (16) ist, orientierten Achse (48) gelagert ist und jeweils in Bezug auf die Seitenteile (14; 14') verschwenkbar ist.

4. Landwirtschaftliche Maschine nach zumindest einem der vorhergehenden Ansprüche, **dadurch gekennzeichnet, dass** das Tiefenführungselement (40) als Einzelelement oder als Doppelelement oder als Walze ausgeführt ist.

5. Landwirtschaftliche Maschine (10) nach zumindest einem der vorhergehenden Ansprüche, **dadurch gekennzeichnet, dass** in Transportposition zwischen den Seitenteilen (14; 14') und dem Mittelteil (12) zugeordnet ein Vorratsbehälter (24) angebracht ist und die Seitenteile (14, 14') sich in einer Transportfahrt in deren gesamter Erstreckung neben dem Vorratsbehälter (24) befinden und/oder der Vorratsbehälter (24) sich in dessen gesamter Erstreckung zwischen den Seitenteilen (14; 14') befindet.

6. Landwirtschaftliche Maschine (10) nach Anspruch 5, **dadurch gekennzeichnet, dass** das den Arbeitswerkzeugen (28) vorgeordnete Tiefenführungselement (40) vor dem Vorratsbehälter (24) und/oder seitlich zu diesem angeordnet ist, und dass das den Arbeitswerkzeugen (28) nachgeordnete Tiefenführungselement (40) hinter dem Vorratsbehälter (24) und/oder seitlich zu diesem angeordnet ist.

7. Landwirtschaftliche Maschine nach zumindest einem der vorhergehenden Ansprüche, **dadurch gekennzeichnet, dass** ein Verschwenken des Tiefenführungselements (40) in Bezug auf das Seitenteil (14; 14') mittels eines Antriebs (52) erfolgt, insbesondere mittels eines Linearantriebs oder eines Schwenkantriebs.

8. Landwirtschaftliche Maschine nach zumindest einem der vorhergehenden Ansprüche, **dadurch gekennzeichnet, dass** diese eine Steuerungssystem aufweist, mittels welchem Klappzylinder (38) zum Verschwenken der Seitenteile (14; 14') zum Mittelteil (12) angesteuert werden und mittels des Steuerungssystems beim Verschwenken der Seitenteile (14; 14') automatisch ein Verschwenken des Tiefenführungselementes (40) erfolgt.

9. Landwirtschaftliche Maschine nach zumindest einem der vorhergehenden Ansprüche, **dadurch gekennzeichnet, dass** ein Anschlagelement (54) vorgesehen ist, mittels welchem der Schwenkweg des Tiefenführungselements (40) begrenzt werden kann.

## Claims

1. An agricultural machine (10) used for soil tillage and/or for spreading agricultural distribution goods, which agricultural machine (10) is subdivided transversely to a driving direction (16) into at least three machine sections, wherein in each instance side parts (14; 14') are arranged laterally to a central part (12), which side parts (14; 14') are swivelable about horizontal longitudinal axes (18) in relation to the central part (12), wherein the side parts (14; 14') are swivelled at least largely horizontal in relation to the central part (12) in a work position of the agricultural machine (10), and wherein the side parts (14, 14') are swivelled at least largely perpendicular to the central part (12) in a transport position of the agricultural machine (10), wherein each side part (14; 14') has at least one depth control element (40) assigned to it, which depth control element (40) is designed as depth control wheel, wherein work implements (28) are assigned to at least the side parts (14; 14'), and
- wherein the depth control element (40), which is designed as depth control wheel, is arranged upstream from the work implements (28), and/or
- wherein the depth control element (40), which is designed as depth control wheel, is arranged downstream from the work implements (28), and in this context additionally lies on a plane together with an axle of transport wheels of the agricultural machine (10), **characterised in that**
the particular depth control element (40) is mounted to the particular side part (14, 14') so as to be swivelable about an axis (48), which is oriented independently of the position of the agricultural machine (10) parallel to the driving direction (16) or at an angle that is less than 90° to the driving direction (16), and so as to be swivelable about the axis (48) in relation to the side parts (14; 14'), wherein
the particular depth control element (40), when in a work position, is arranged perpendicular and/or at least largely perpendicular to the side part (14; 14'), and wherein the depth control element (40) in a transport position is swivelable such that the axis of rotation (46) of the depth control element (40) is arranged diagonal to the side part (14; 14'), wherein
the depth control element (40) is mounted to be freely rotatable by a perpendicular axis of rotation (46) in the work position.

2. The agricultural machine according to claim 1, **characterised in that** at least the side parts (14; 14') have work implements (28) assigned to them and **in that** a depth control element (40) is arranged between said work implements (28).

3. The agricultural machine according to claim 1, **characterised in that** the depth control element (40) arranged upstream from the work implements (28) and the depth control element (40) arranged downstream from the work implements (28) are mounted together on a common carrier (44), which carrier (44) is mounted by means of an axis (48), which is oriented independently of the position of the agricultural machine (10) parallel to or at an angle that is less than 90° to the driving direction (16), and so as to be in each instance swivelable in relation to the side parts (14; 14').

4. The agricultural machine according to at least one of the previous claims, **characterised in that** the depth control element (40) is designed as individual element or as double element or as roller.

5. The agricultural machine (10) according to at least one of the previous claims, **characterised in that** a storage hopper (24) is arranged between the side parts (14; 14') and assigned to the central part (12) in transport position, and the side parts (14, 14') are located with their entire extension next to the storage hopper (24) during a transport drive, and/or the storage hopper (24) is located with its entire extension between the side parts (14; 14') during a transport drive.

6. The agricultural machine (10) according to claim 5, **characterised in that** the depth control element (40) arranged upstream from the work implements (28) is arranged in front of and/or on the side of the storage hopper (24), and **in that** the depth control element (40) arranged downstream from the work implements (28) is arranged behind and/or on the side of the storage hopper (24).

7. The agricultural machine according to at least one of the previous claims, **characterised in that** a swivelling of the depth control element (40) in relation to the side part (14; 14') is carried out by means of a drive (52), in particular, by means of a linear drive or a swivel drive.

8. The agricultural machine according to at least one of the previous claims, **characterised in that** said agricultural machine has a control system by means of which folding cylinders (38) are controlled to swivel the side parts (14; 14') toward the central part (12), and a swivelling of the depth control element (40) is automatically carried out by means of the control system upon the swivelling of the side parts (14; 14').

9. The agricultural machine according to at least one of the previous claims, **characterised in that** a stop element (54) is provided, by means of which the swivel range of the depth control element (40) can be limited.

## Revendications

1. Machine agricole (10) destinée au travail du sol et/ou à l'épandage de matériau d'épandage agricole, laquelle est, à la transversale d'un sens de marche (16) divisée en au moins trois tronçons de machine, des parties latérales (14 ; 14') étant agencées respectivement latéralement par rapport à une partie médiane (12), lesquelles parties latérales peuvent être pivotées autour d'axes longitudinaux (18) horizontaux par rapport à ladite partie médiane (12), les parties latérales (14 ; 14') étant, dans une position de travail de ladite machine agricole (10), pivotées au moins sensiblement à l'horizontale par rapport à la partie médiane (12), et les parties latérales (14, 14') étant, dans une position de transport de la machine agricole (10), pivotées au moins sensiblement à la verticale par rapport à la partie médiane (12), au moins un élément de guidage en profondeur (40) étant associé à chaque partie latérale (14 ; 14'), lequel est réalisé sous forme de roue de guidage en profondeur, des outils de travail (28) étant associés au moins aux parties latérales (14 ; 14'), et
- ledit élément de guidage en profondeur (40), réalisé sous forme de roue de guidage en profondeur, étant monté en amont de ces parties latérales, et/ou
- ledit élément de guidage en profondeur (40), réalisé sous forme de roue de guidage en profondeur, étant monté en aval de ces parties latérales et reposant à cet égard en outre sur un plan commun avec un axe de roues de transport de la machine agricole (10), **caractérisée en ce que**
l'élément respectif de guidage en profondeur (40) est disposé sur la partie latérale (14, 14') respective, pivotable autour d'un axe (48) orienté parallèlement au sens de marche (16) indépendamment de la position de la machine agricole (10) ou dans un angle inférieur à 90° par rapport au sens de marche (16), et qu'il peut être pivoté autour de l'axe (48) par rapport aux parties latérales (14 ; 14'),
l'élément de guidage en profondeur (40) étant, dans une position de travail, agencé à la verticale et/ou au moins sensiblement à la verticale par rapport à la partie latérale (14 ; 14'), et l'élément de guidage en profondeur (40) étant, dans une position de transport, pivotable de telle sorte que l'axe de rotation (46) de l'élément de guidage en profondeur (40) est agencé à la diagonale de la partie latérale (14 ; 14'),
ledit élément de guidage en profondeur (40) étant, dans la position de travail, disposé en rotation libre par un axe de rotation vertical (46).

2. Machine agricole selon la revendication 1, **caractérisée en ce que** des outils de travail (28) sont associés au moins aux parties latérales (14 ; 14') et qu'un élément de guidage en profondeur (40) est agencé entre ceux-ci.

3. Machine agricole selon la revendication 1, **caractérisée en ce que** l'élément de guidage en profondeur (40) agencé en amont desdits outils de travail (28) ainsi que l'élément de profondeur (40) agencé en aval desdits outils de travail (28) sont montés sur un support (44) commun, lequel support (44) est disposé à l'aide d'un axe (48) orienté, indépendamment de la position de la machine agricole (10), parallèlement au sens de marche ou dans un angle inférieur à 90° par rapport au sens de la marche (16), et est respectivement pivotable par rapport aux parties latérales (14 ; 14').

4. Machine agricole selon au moins l'une quelconque des revendications précédentes, **caractérisée en ce que** l'élément de guidage en profondeur (40) est réalisé sous forme d'élément individuel ou sous forme d'élément double ou de rouleau.

5. Machine agricole (10) selon au moins l'une quelconque des revendications précédentes, **caractérisée en ce qu'**un récipient de stockage (24) est, en position de transport, fixé entre les parties latérales (14 ; 14') et associé à la partie médiane (12), et que les parties latérales (14 ; 14') se trouvent, dans un trajet de transport, sur toute leur étendue, à côté dudit récipient de stockage (24) et/ou que ledit récipient de stockage (24) se trouve, sur toute son étendue, entre les parties latérales (14 ; 14').

6. Machine agricole (10) selon la revendication 5, **caractérisée en ce que** l'élément de guidage en profondeur (40) agencé en amont des outils de travail (28) est agencé avant le récipient de stockage (24) et/ou latéralement par rapport à celui-ci, et que l'élément de guidage en profondeur (40) agencé en aval des outils de travail (28) est agencé derrière le récipient de stockage (24) et/ou parallèlement par rapport à celui-ci.

7. Machine agricole selon au moins l'une quelconque des revendications précédentes, **caractérisée en ce qu'**un pivotage de l'élément de guidage en profondeur (40) par rapport à la partie latérale (14 ; 14') s'effectue à l'aide d'un entraînement (52), notamment à l'aide d'un entraînement linéaire ou d'un entraînement de pivotement.

8. Machine agricole selon au moins l'une quelconque des revendications précédentes, **caractérisée en ce que** ladite machine présente un système de commande permettant de piloter des vérins de repliement (38) destinés à faire pivoter les parties latérales (14 ; 14') par rapport à la partie médiane (12), et qu'à l'aide dudit système de commande, un pivotement de l'élément de guidage en profondeur (40) survient automatiquement lors du pivotement des parties latérales (14 ; 14').

9. Machine agricole selon au moins l'une quelconque des revendications précédentes, **caractérisée en ce qu'**un élément de butée (54) est prévu, permettant de délimiter l'ampleur du pivotement de l'élément de guidage en profondeur (40).
